# EUROPEAN PATENT APPLICATION

(11) **EP 4 778 803 A1**
(43) Date of publication of application: **22.07.2026**
(21) Application number: 25151964.1
(22) Date of filing: 15.01.2025
(51) Int. Cl.: B61L 15/00, B61G 5/10, B61L 27/04, B61D 17/22, B60D 1/62

(54) **A SYSTEM FOR COUPLING A FIRST COACH OF A TRAIN TO A SECOND COACH OF THE TRAIN**

(71) Applicant: Hübner GmbH & Co. KG, 34123 Kassel (DE)
(72) Inventor: Muniyan, Kothandabalamurali, 34119 Kassel (DE)

(57) **Abstract**

The present invention relates to a system for coupling a first coach of a vehicle to a second coach of the vehicle. The system comprises: a first coupling controller to be mounted at the first coach; a first bus interface to be mounted at the first coach, wherein the first bus interface is operatively connected to the first coupling controller such that during operation of the system, the first bus interface communicates data to and from the first coupling controller; a first actuator driver to be mounted at the first coach, wherein the first actuator driver is operatively connected to the first coupling controller such that, during operation of the system, the first actuator driver receives a first coupling actuator signal from the first coupling controller, and wherein the first actuator driver comprises a first actuator port connectable to a first latching actuator or a first motion actuator of the first bellows of the first coach; a second coupling controller to be mounted at the second coach; a second bus interface to be mounted at the second coach, wherein the second bus interface is operatively connected to the second coupling controller such that during operation of the system, the second bus interface communicates data to and from the second coupling controller; and a second actuator driver to be mounted at the second coach, wherein the second actuator driver is operatively connected to the second coupling controller such that, during operation of the system, the second actuator driver receives a second coupling actuator signal from the second coupling controller, wherein the second actuator driver comprises a second actuator port connectable to a second latching actuator or a second motion actuator of the second bellows of the second coach; a communication bus, wherein the communication bus, during operation of the system, interconnects the first bus interface and the second bus interface; wherein the first coupling controller and the second coupling controller are set up such that, during a coupling operation of the first coach to the second coach, the first coupling controller and the second coupling controller carry out the following steps: establishing a bus communication between the first coupling controller and the second coupling controller via the first bus interface and the second bus interface; the first coupling controller receiving a coupling instruction via the communication bus and the first bus interface, the first coupling controller upon receipt of the coupling instruction generating the first coupling actuator signal and outputting the first coupling actuator signal to the first actuator driver; and the second coupling controller generating the second coupling actuator signal and outputting the second coupling actuator signal to the second actuator driver.

## Description

The present invention relates to a system for coupling a first coach of a vehicle to a second coach of the vehicle.

Depending on the number of expected passengers, the number of coaches in a vehicle, in particular in a train needs to be increased or decreased. Matching the number of coaches to the number of expected passengers reduces overall energy consumption of a railway system. This in particular applies to vehicles used for public local transport.

In order to accommodate more passengers during peak hour operation, the number of cars has to be increased and during normal operation hours can be decreased. Such extension and reduction of the number of coaches in a vehicle according to the prior art is effected in two different ways.

For example, there are train systems, wherein two complete trains may be connected or divided using automatic mechanical coupling and uncoupling. When two trains are coupled, they run as a single train to accommodate more passengers during peak hours. While easy to couple or uncouple, the systems carry all facilities of the train twice or more during peak hour operation. E.g., each of the trains coupled has typically two driver's cabs.

Alternatively, a single train for increasing or decreasing the number of coaches is driven to a depot or station, where the train is separated between two coaches and one or more intermediate coaches are added or removed from the train. Coupling and uncoupling an intermediate coach from a single train according to the prior art is a manual operation.

In the prior art, automatic couplers are disclosed which allow to automatically couple or uncouple the coaches mechanically, i.e. to provide the required mechanical connection such that one coach pulls or pushes the other. However, the prior art coupling and uncoupling requires manual effort for coupling and uncoupling the bellows. This means, for each coupling and uncoupling operation an operator was required in the past to at least couple or uncouple the two bellows of the coaches involved. This is a time-consuming and costly way to increase or decrease the number of coaches of a single train.

Therefore, European patent application EP 4 410 630 A1 describes a system for automatically coupling a first coach of the train to a second coach of the train wherein the system in addition to a set of first and second automatic couplers providing a mechanical coupling comprises first and second bellows at the first and second coaches, respectively, which provide an automatical coupling and uncoupling operation. In order to provide the automatic coupling and uncoupling operation of the first and second bellows the system comprises actuators driving functions and motions of the first and second bellows.

It has turned out that although providing a good solution for the required operations to couple and uncouple two coaches, the concepts known from the prior art lack an easy and modular integration into the vehicle's overall functional management system.

Consequently, it is an object of the present invention to provide a system for coupling a first coach of a vehicle to a second coach of the vehicle allowing easy integration of the control of coupling and uncoupling operations at each individual coach, into the overall vehicle control architecture.

According to the invention, the above object is solved by a system according to independent claim 1. The system according to the present invention comprises: a first coupling controller to be mounted at the first coach; a first bus interface to be mounted at the first coach, wherein the first bus interface is operatively connected to the first coupling controller such that during operation of the system, the first bus interface communicates data to and from the first coupling controller; a first actuator driver to be mounted at the first coach, wherein the first actuator driver is operatively connected to the first coupling controller such that, during operation of the system, the first actuator driver receives a first coupling actuator signal from the first coupling controller, and wherein the first actuator driver comprises a first actuator port connectable to a first latching actuator or a first motion actuator of the first bellows of the first coach; a second coupling controller to be mounted at the second coach; a second bus interface to be mounted at the second coach, wherein the second bus interface is operatively connected to the second coupling controller such that during operation of the system, the second bus interface communicates data to and from the second coupling controller; and a second actuator driver to be mounted at the second coach, wherein the second actuator driver is operatively connected to the second coupling controller such that, during operation of the system, the second actuator driver receives a second coupling actuator signal from the second coupling controller, wherein the second actuator driver comprises a second actuator port connectable to a second latching actuator or a second motion actuator of the second bellows of the second coach; a communication bus, wherein the communication bus, during operation of the system, interconnects the first bus interface and the second bus interface; wherein the first coupling controller and the second coupling controller are set up such that, during a coupling operation of the first coach to the second coach, the first coupling controller and the second coupling controller carry out the following steps:
- establishing a bus communication between the first coupling controller and the second coupling controller via the first bus interface and the second bus interface,
- the first coupling controller receiving a coupling instruction via the communication bus and the first bus interface,
- the first coupling controller upon receipt of the coupling instruction generating the first coupling actuator signal and outputting the first coupling actuator signal to the first actuator driver, and
- the second coupling controller generating the second coupling actuator signal and outputting the second coupling actuator signal to the second actuator driver.

The system according to the present invention comprises those elements or components required for a control of the coupling operation between the first coach and the second coach. Those elements are to be attached to the first coach and to the second coach of the vehicle. However, although referring e.g. to a first bellows of the first coach and a second bellows of the second coach, those bellows as well as their actuators are not part of the system according to the independent claim.

It is the general idea of a system according to the present invention to provide a controller architecture enabling control of the coupling and uncoupling operations at each individual coach and integrating these functionalities in the overall train control. Integration of the individual controllers for each coach into the train control is provided by a bus architecture, which allows integration of new coaches once they are coupled to an existing vehicle unit.

The number words first, second and third are used in the text only to distinguish the individual elements and regardless of which coach these elements are mounted on. E.g. the first and third coupling controllers are to be mounted at the first coach.

Instructions and signals communicated via the communication bus are considered data in the sense of the present application.

At the first coach a first coupling controller, a first bus interface and a first actuator driver of the system will be mounted. At the second coach, a second coupling controller, a second bus interface and a second actuator driver will be mounted. The first bus interface and the second bus interface of the system are connected by the communication bus. The first and second actuator drivers are connectable to respective first and second actuators upon integration of the system according to the present invention into a set of a first coach and a second coach of a vehicle.

The first coupling controller to be mounted at the first coach controls at least one first bellows at a first end of the first coach. In an embodiment of the present invention, the first coupling controller at the first coach is set up to control a coupling of the coach at both ends of the coach. I.e. a single first coupling controller may be used at the first coach to control a coupling of two bellows.

In an alternative embodiment, each bellows mounted at an end of a coach comprises its own controller. E.g. the first coupling controller at the first coach is only responsible for control of the first bellows mounted at the first coach. Thus, according to an embodiment of the present invention, the system comprises a third coupling controller to be mounted at the first coach; a third bus interface to be mounted at the first coach, wherein the third bus interface is operatively connected to the third coupling controller such that, during operation of the system, the third bus interface communicates data to and from the third coupling controller and wherein the communication bus, during operation of the system, interconnects the first bus interface , the second bus interface and the third bus interface; a third actuator driver to be mounted at the first coach, wherein the third actuator driver is operatively connected to the third coupling controller such that, during operation of the system, the third actuator driver receives a third coupling actuator signal from the third coupling controller, and wherein the third actuator driver comprises a third actuator interface connectable to a third latching actuator or a third motion actuator of a third bellows of the first coach.

In an embodiment of the present invention, at each coach a plurality of actuator drivers with an actuator port each is provided in order to initiate actuator operations at a number of actuators. In particular, in an embodiment of the present invention, the system comprises a plurality of first actuator drivers to be mounted at the first coach, wherein each of the plurality of first actuator drivers is operatively connectable to one of a plurality of first actuators.

Typically, the first, second and optionally the third coupling controllers are identical with respect to their design. In an embodiment, all coupling controllers of the vehicle are identical.

In an embodiment of the present invention, the communication bus is a linear bus. In an embodiment, the communication bus is a wired bus. Examples of a wired bus is a field bus, in particular a CAN-bus. In an alternative embodiment, the communication bus is a wireless bus.

In an embodiment, the coupling controller, the bus interface and the actuator driver form a controller module. Optionally, the sensor interface is also part of this controller module. In an embodiment, the coupling controller, the bus interface, the actuator driver and optionally the sensor interface are integrated on a single circuit board.

It is evident, that the first coupling controller, the first bus interface, the first actuator driver and optionally the first sensor interface in an embodiment form a first coupling controller module, wherein the second coupling controller, the second bus interface, the second actuator driver and optionally the second sensor interface form a second coupling controller module.

In principle, each of the coupling controllers to be mounted at the individual coaches can be independent and equal receiving instructions only from a superordinate train controller. However, in an embodiment of the present invention, the two coupling controllers controlling a coupling operation between two adjacent coaches at least during a coupling or an uncoupling operation act as in master/slave configuration. Consequently, in an embodiment of the present invention, the first coupling controller and the second coupling controller are set up such that, during a coupling operation of the first coach to the second coach, the first coupling controller and the second coupling controller carry out the following steps:
- determining the first coupling controller to become a coupling master controller and the second coupling controller to become a coupling slave controller,
- the first coupling controller upon receipt of the coupling instruction initiating the second coupling controller to generate the second coupling actuator signal and to output the second coupling actuator signal to the second actuator driver.

In this master/slave configuration, one of the coupling controllers, namely the first coupling controller, is the controller in charge of the coupling or uncoupling operation. A master/slave tandem of the first coupling controller and the second coupling controller avoids additional efforts for synchronization.

In an embodiment of the present invention, the coupling master controller also provides signaling of a result and eventual malfunctions of a coupling or uncoupling operation to a superordinate train controller.

For determining which of the first and second coupling controllers to become the coupling master controller, a number of possibilities exists. In an embodiment of the present invention, the coupling controller which is powered earlier is determined the master coupling controller. It is the idea of this scheme that typically a powered coupling controller will be part of the basic vehicle unit including a driver's cab, to which basic vehicle unit during a coupling operation a single coach or a group of coaches will be coupled.

In an embodiment, wherein the first and second coupling controllers will control an uncoupling process, the coupling controller which will remain in a basic operable vehicle unit comprising a driver's cab after uncoupling will be the master coupling controller in the master/slave configuration of this particular uncoupling operation.

So far, the functionalities of the first and second coupling controllers have mainly been described with reference to a coupling operation. Coupling in the sense of the present invention is the basic operation.

However, in an embodiment of the present invention the system is a system for coupling and for uncoupling the first coach from the second coach. In this embodiment, the first coupling controller and the second coupling controller are set up such that, during an uncoupling operation of the first coach from the second coach, the first coupling controller and the second coupling controller carry out the following steps:
- the first coupling controller receiving an uncoupling instruction while the communication bus and the first bus interface,
- the first coupling controller upon receipt of the uncoupling instruction generating the first uncoupling actuator signal and outputting the first uncoupling actuator signal to the first actuator driver, and
- the second coupling controller generating a second uncoupling actuator signal and outputting the second uncoupling actuator signal to the second actuator driver.

As it has been described above for the coupling operation, also during the uncoupling operation it might be advantageous once the first coupling controller and the second coupling controller operate in a master/slave configuration. Thus, in an embodiment of the present invention, the first coupling controller and the second coupling controller are set up such that, during an uncoupling operation of the first coach from the second coach, the first coupling controller and the second coupling controller carry out the following steps:
- determining the first coupling controller to become a coupling master controller and the second coupling controller to become a coupling slave controller,
- the first coupling controller upon receipt of the uncoupling instruction initiating the second coupling controller to generate the second uncoupling actuator signal and to output the second uncoupling actuator signal to the second actuator driver.

According to an embodiment, the system further comprises a train controller to be mounted at the first coach or at the second coach; a control knob, wherein the control knob is arranged such that when the control knob is actuated, the control knob generates a coupling command, wherein the control knob is operatively connected to the train controller such that, during operation of the system, the train controller receives the coupling command from the control knob; and a train controller bus interface, wherein the train controller bus interface is connected to the communication bus, and wherein the train controller bus interface is operatively connected to the train controller such that, during operation of the system, the train controller bus interface receives the coupling instruction from the train controller; and wherein the train controller is set up such that it carries out the following steps upon receipt of the coupling command:
- generating the coupling instruction, and
- transmitting the coupling instruction via the train controller bus interface to the communication bus and the first bus interface to the first coupling controller.

In an embodiment, wherein the first coupling controller and the second coupling controller, during a coupling operation, operate in a master/slave configuration, it is sufficient to receive the coupling instruction at the first coupling controller. However, in an embodiment, wherein the first and second coupling controllers are on equal levels, the coupling instruction will be received via the communication bus at the first coupling controller as well as at the second coupling controller.

The control knob for initiating the coupling operation or also the uncoupling operation according to an embodiment is to be mounted in a vehicle cab of the first coach or of the second coach. In an alternative embodiment, the control knob could be remotely located, e.g. when the vehicle is operated without a driver. In this embodiment, the control knob is operatively connected to the train controller via the communication network, e.g. a local area network or the Internet.

In an embodiment of the present invention, the control knob is a virtualized element, e.g. a slider on an operator's screen. In a further embodiment, the control knob is a holographic knob or a push button with light.

In an embodiment of the present invention, the train controller is the primary train control and management system of the vehicle.

In order to fully control the coupling or uncoupling operation, the coupling controller according to an embodiment processes a sensor signal received from a sensor.

Consequently, in an embodiment of the present invention, the system further comprises a first sensor interface to be mounted at the first coach, wherein the first sensor interface is operatively connectable to a first sensor for detecting a state of the first bellows of the coach, such that, during operation of the system, the first sensor interface receives a first sensor signal from the first sensor, and wherein the first sensor interface is operatively connected to the first coupling controller such that, during operation of the system, the first coupling controller receives the first sensor signal from the first sensor interface.

In an embodiment of the present invention the first sensor and any further sensor, in particular a second and a sensor is selected from a group consisting of a mechanical switch, a magnetic switch, a capacity sensor, a rotary encoder, a linear encoder or a combination thereof.

It is evident that in an embodiment of the invention each of the coupling controllers comprises a sensor interface. In particular, in an embodiment, the system comprises a second sensor interface be mounted at the second coach, wherein the second sensor interface is operatively connectable to a second sensor for detecting the state of a second bellows of the second coach, such that, during operation of the system, the second sensor interface receives a second sensor signal from the second sensor, and wherein the second sensor interface is operatively connected to the second coupling controller such that, during operation of the system, the coupling controller receives the second sensor signal from the second sensor interface.

In an embodiment of the present invention, at each coach a plurality of sensor interfaces is provided in order to receive sensor signals from a number of sensors. In particular, in an embodiment of the present invention, the system comprises a plurality of first sensor interfaces to be mounted at the first coach, wherein each of the plurality of first sensor interfaces is operatively connectable to one of a plurality of first sensors for detecting a state of the first bellows.

In an embodiment, the respective sensor interface is part of the respective controller module. In particular, in an embodiment, the first sensor interface is part of the first coupling controller module and the second sensor interface is part of the second coupling controller module.

In an embodiment of the present invention, the bus communication between the first coupling controller and the second coupling controller via the first bus interface, the communication bus and the second bus interface, during operation of the system, is established upon providing a mechanical contact between the first coach and the second coach. A mechanical contact between the first coach and the second coach in an embodiment is provided by mechanical coupling between two couplers of the first coach and the second coach. In an embodiment, mechanical coupling of the first and second coaches also establishes a wired or wireless connection for the communication bus between the two coaches.

It is the primary function of the system according to the present invention to control coupling and uncoupling of a set of a first bellows and a second bellows between the first coach and the second coach. Consequently, in an embodiment of the present invention, the system comprises a first bellows, wherein the first bellows provides protection of a passenger or an object moving from the first coach to the second coach, and wherein the first bellows comprises a first coupling frame, and a first latching mechanism at the first coupling frame, wherein the first coupling frame is releasably coupable by the first latching mechanism to a second coupling frame of a second bellows of the second coach, wherein the first bellows comprises the first latching actuator, wherein the first latching actuator, during operation of the system, drives the first latching mechanism between a latched state and an unlatched state, wherein the first actuator port is operatively coupled to the first latching actuator, wherein the first coupling actuator signal is a latching signal, wherein the latching signal is transmitted from the first actuator driver via the first actuator port to the first latching actuator, and wherein the first latching actuator upon receipt of the first latching signal drives the first latching mechanism from the unlatched state to the latched state. In this embodiment, the system further comprises a second bellows, wherein the second bellows provides protection of a passenger or an object moving from the first coach to the second coach, wherein the second bellows comprises a second coupling frame, and a second latching mechanism at the second coupling frame, wherein the second coupling frame is releasably coupable by the second latching mechanism to the first coupling frame of the first bellows at the first coach, wherein the second bellows comprises a second latching actuator, wherein the second latching actuator, during operation of the system, drives the second latching mechanism between a latched state and an unlatched state, wherein the second actuator port is operatively coupled to the second latching actuator, wherein the second coupling actuator signal includes a second latching signal, wherein the second latching signal is transmitted from the second actuated driver via the second actuator port to the second latching actuator, and wherein the second latching actuator upon receipt of the second latching signal drives the second latching mechanism from the unlatched state to the latched state.

In an embodiment of the present invention, only latching and unlatching between the coupling frames of the first and second bellows is automated. At the same time, forwarding and retracting the first and second coupling frames could be carried out manually.

However, in an embodiment, also the motion of the first and second coupling frames is effected automatically. Correspondingly, in an embodiment of the present invention, the first bellows comprises a first mounting frame, wherein the first mounting frame is fixable to a wall of the first coach, wherein the first bellows comprises a first motion actuator, wherein the first motion actuator is arranged to move the first coupling frame of the first bellows relatively to the first mounting frame between an extended position and a retracted position, wherein in the extended position a distance between the first coupling frame and the first mounting frame is larger than in the retracted position, wherein the first actuator port is operatively coupled to the first motion actuator, wherein the first coupling actuator signal includes a first extent signal, wherein the first extent signal is transmitted from the first actuator driver via the first actuator port to the first motion actuator prior to transmitting the first latching signal to the first latching activator, and wherein the first motion actuator upon receipt of the first extent signal drives the first coupling frame from the retracted position to the extended position, and wherein the second bellows comprises a second mounting frame, wherein the second mounting frame is fixable to a wall of the second coach, wherein the second bellows comprises a second motion actuator, wherein the second motion actuator is arranged to move the second coupling frame of the second bellows relatively to the second mounting frame between an extended position and a retracted position, wherein in the extended position a distance between the second coupling frame and the second mounting frame is larger than in the retracted position, wherein the second actuator port is operatively coupled to the second motion actuator, wherein the second coupling actuator signal includes a second extent signal, wherein the second extent signal is transmitted from the second actuator driver via the second actuator port to the second motion actuator prior to transmitting the second latching signal to the second latching actuator, and wherein the second motion actuator upon receipt of the second extent signal drives the second coupling frame from the retracted position to the extended position.

It is evident that in an embodiment, wherein latching and motion of the coupling frame with respect to the mounting frame of a bellows is automated, the respective coupling controller comprises a plurality of actuator drivers as well as a plurality of associated actuator ports, wherein each of the motion actuator and the latching actuator are operatively connected to one of the plurality of actuator ports and thus to one of the plurality of actuator drivers.

In a further embodiment of the present invention, the first bellows comprises a first latching sensor, wherein the first latching sensor is operatively coupled to the first sensor interface, wherein the first latching sensor is arranged to sense whether the first latching mechanism is in the latched state and to generate a first latched signal once the first latching mechanism is in the latched state, and wherein the second bellows comprises a second latching sensor, wherein the second latching sensor is operatively coupled to the second sensor interface, wherein the second latching sensor is arranged to sense whether the second latching mechanism is in the latched state.

These first and second latched signals can be used by the first and second coupling controllers in a number of ways. The first and second coupling controllers can communicate the first and second latched signals to the train controller. In an embodiment, wherein the first and second train controllers are operated in a master/slave configuration, signaling will be effected by the first coupling controller being the master coupling controller. In this case, the second coupling controller communicates the second latched signal to the first coupling controller.

In an embodiment of the present invention, receipt of the first latched signal at the second coupling controller and receipt of the second latched signal at the first coupling controller initiates the next steps in the coupling process of the first and second bellows.

In an embodiment, wherein the first coupling controller is the master controller, receipt of the first and second latched signals at the first coupling controller initiate the next steps of the coupling operation of the first and second bellows.

According to an embodiment of the present invention, the first bellows comprises a first position sensor, which first position sensor is operatively coupled to the first sensor interface, wherein the first position sensor is arranged to sense whether the first bellows is in the extended position and to generate a first extended position signal once the first bellows is in the extended position, wherein the first coupling controller is arranged to sense the latching signal after receipt of the first extended position signal. In this embodiment, a coupling operation allows to complete motion of the first and second coupling frames to the extended positions prior to latching of the first and second coupling frames together.

While so far automated coupling and uncoupling operations of the first and second bellows has been considered, the system in an embodiment also provides for an automatic mechanical coupling between the first coach and the second coach. Thus, in an embodiment of the present invention, the system comprises a first automatic coupler, wherein the first automatic coupler is mountable at an end of the first coach, wherein the first automatic coupler provides for a mechanical coupling to a second automatic coupler mountable at the second coach, wherein the first automatic coupler comprises a first coupling actuator and a first locking mechanism, wherein the first coupling actuator is operatively connected to the first actuator driver, wherein the first coupling actuator, during operation of the system, drives the first locking mechanism between a locked state and an unlocked state, wherein the first coupling actuator signal includes a first coupling signal, and wherein the first coupling actuator upon receipt of the first coupling signal drives the first locking mechanism from the unlocked state to the locked state. In this embodiment, the system further comprises a second automatic coupler, wherein the second automatic coupler is mountable at an end of the second coach, wherein the second automatic coupler provides for a mechanical coupling to the first automatic coupler, wherein the second automatic coupler comprises a second coupling actuator and a second locking mechanism, wherein the second coupling actuator is operatively connected to the second actuator driver, wherein the second coupling actuator, during operation of the system, drives the second locking mechanism between a locked state and an unlocked state, wherein the second coupling actuator signal includes a second coupling signal, and wherein the second coupling actuator upon receipt of the second coupling signal drives the second locking mechanism from the unlocked state to the locked state.

In an embodiment of the present invention, the train controller comprises a master clock and the first coupling controller and the second coupling controller each comprise a slave clock, wherein when connecting at least the first coupling controller or the second coupling controller to the communication bus, the slave clock of the respective coupling controller is synchronized with the master clock.

At least one of the above objects is also solved by a first coach and a second coach of a vehicle comprising a system according to an embodiment described above. The vehicle according to an embodiment of the present invention is a road vehicle, e.g. bus, or a train. In an embodiment, the train is selected from a long-distance train, a local train and a tramway.

The concept of the present invention may be applied to road based and to rail based vehicles. Still, for sake of simplicity the term train is used to denote particular elements if the system, eg. the train controller.

In an embodiment, the vehicle is a vehicle wherein the individual coaches of the vehicle are coupled by semi-permanent drawbars.

According to an embodiment of the present invention, the first coupling controller is arranged, upon receipt of the coupling instruction, to
- generate and send a first extend signal as the first coupling actuator signal,
- initiate the second coupling controller to generate and send a second extend signal as the second coupling actuator signal,
- wait for the first extended position signal from the first position sensor and for the second extended position signal from the second position sensor,
- upon receipt of the first extended position signal and the second extended position signal generate and send a first latch signal as the first coupling actuator signal, and initiate the second coupling controller to generate and send a second latch signal as the second coupling actuator signal,
- wait for the first latched signal from the first latching sensor and for the second latched signal from the second latching sensor, and
- upon receipt of the first latched signal and the second latched send a coupling completed signal to the train controller.

According to an embodiment of the present invention, the first coupling controller is arranged, upon receipt of the uncoupling instruction, to
- generate and send a first unlatch signal as the first coupling actuator signal,
- initiate the second coupling controller to generate and send a second unlatch signal as the second coupling actuator signal,
- wait for the first unlatched signal from the first latching sensor and for the second unlatched signal from the second latching sensor,
- upon receipt of the first unlatched signal and of the second unlatched signal, generate and send a first retract signal as the first coupling actuator signal and initiate the second coupling controller to generate and send a second retract signal as the second coupling actuator signal,
- wait for the first retracted position signal from the first position sensor and for the second retracted position signal from the second position sensor, and
- upon receipt of the first retracted signal and the second retracted signal, send an uncoupling completed signal to the train controller.

Further advantages, features and possible applications of the present invention will become more understandable from the following description of embodiments and the accompanying figures. In the figures, like elements are denoted by identical reference numbers. It should be understood that the embodiments depicted are not limited to the precise arrangements and instrumentalities shown.
- Figure 1: is a schematic side view of a train comprising a system for automatic coupling and uncoupling of two coaches according to the present invention.
- Figure 2: is schematic isometric view of a first bellows of the system for automatic coupling and uncoupling of figure 1.
- Figure 3: is a diagram of an of an embodiment of a system for automatic coupling and uncoupling.
- Figure 4: is a diagram of the core components of the system of Figure 3
- Figure 5: is a diagram of a control unit implementing the core components of the system of Figure 4 at a single coach.

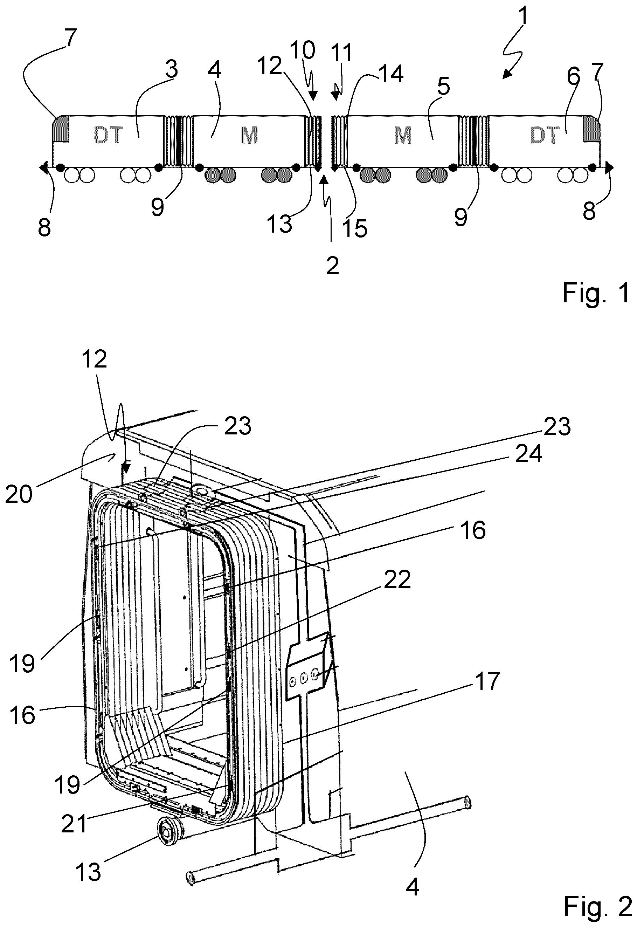

Figure 1 is a schematic representation of a train 1 comprising a system 2 according to an embodiment of the present invention. The train is an example of a vehicle in the context of the present application. In the illustrated example, the train 1 comprises four coaches 3, 4, 5, 6. The coaches denoted by reference numbers 3 and 6 are driving coaches with a pantograph and an operator's cab 7, each. The two coaches denoted by reference numbers 4 and 5 comprise an electrical motor each, each.

The two coaches 4 and 5 in the language of the present application are denoted the first coach 4 and the second coach 5. For the discussion of this exemplary embodiment, it is assumed that first the coaches 4 and 5 shall be coupled to each other after removal of another coach from the train 1. Subsequent to the coupling process, an uncoupling process separating the first coach 4 and the second coach 5 will be described assuming that another coach shall be inserted between the first coach 4 and the second coach 5. Thus, the system 2 is a system for coupling the first coach 4 of the train 1 to the second coach 5 and for uncoupling the first coach 4 from the second coach 5.

The driving coaches 3, 6 at their respective fronts provide a front-end automatic coupler 8. The front-end automatic coupler 8 allows to couple the train 1 to another complete train (not shown in figure 1). The driving coach 3 is coupled to the first coach 4 by an automatic coupler 9 as is the driving coach 6 to the second coach 5.

At the first and second coaches 4 and 5, a system 2 for automatic coupling of the first coach 4 of the train 1 to the second coach 5 of the train 1 is provided. The system 2 consists of two halves, wherein a first half 10 is mounted to the first coach 4 and a second half 11 is mounted to the second coach 5. The two halves 10, 11 are identical to each other and the mechanical components are mirror symmetrical to each other to enable a mechanical coupling of the first coach 4 to the second coach 5.

The first half 10 of the system 1 comprises a first bellows 12 and a first automatic coupler 13 of the semi-permanent drawbar 9. The first automatic coupler 13 is mounted at an end of the first coach 4 and provides for a mechanical coupling to the second automatic coupler 15 mounted at the second coach 5. The second half 11 of the system 1 comprises a second bellows 14 and a second automatic coupler 15 of the semi-permanent drawbar 9. The second automatic coupler 15 is mounted at an end of the second coach 5.

In the embodiment of figure 1, the first and second automatic couplers 13, 15 are wedgelock couplers providing not only a mechanical coupling, but also a coupling of electrical and pneumatic supplies.

In order to better understand the functionalities and operations of the system 1 according to the present invention, the first bellows 12 is shown in more detail in figure 2. The first bellows 12 is mounted to a wall 20 of the first coach 4. The first bellows 12 comprises a coupling frame 16 for coupling the first bellows 12 to the second bellows 14. Furthermore, the first bellows 12 comprises a first mounting frame 17, wherein the first bellows 12 is mounted to the end wall 20 of the first coach 4 by the first mounting frame 17.

To enable a fully automatic coupling and uncoupling operation, the first coupling frame 16 is equipped with a first latching mechanism 19. A first latching actuator 21 is mechanically coupled to the first latching mechanism 19 allowing to latch and unlatch a mechanical connection of the first coupling frame 16 to the second coupling frame of the second bellows 14.

In addition, the first bellows 12 comprises a first latching sensor. The first latching sensor is implemented as a first latch switch 22. This latch switch 22 provides a first latched signal when the latching mechanism 19 is moved by the first latching actuator 21 into the latched position and a first unlatched signal once the first latching mechanism reaches its unlatched position.

Furthermore, the first bellows 12 comprises a first motion actuator in the form of a first motion cylinder 23. The first motion cylinder 23 is mounted between the first mounting frame 17 and the first coupling frame 16 and is arranged to move the first coupling frame 16 relatively to the first mounting frame 17 between a retracted position shown in figure 2 and an extended position. In the extended position the first coupling frame 16 of the first bellows 12 meets the second coupling frame of the second bellows 14. Thus, in the extended position, a distance between the first coupling frame 16 and the first mounting frame 17 is larger than in the retracted position.

The first bellows 12 also comprises a first position sensor implemented as a first front face switch 24. The first front face switch 24 indicates whether the first bellows is in the retracted position or whether the first bellows is in the extended position. In the extended position during a coupling or uncoupling process contact between the first coupling frame 16 and the second coupling frame is established. When the first and second coupling frames are in contact the first and second front face switches generate first and second extended position signals, respectively. When the first and second coupling frames are in their retracted positions the first and second front face switches generate first and second retracted position signals, respectively.

In the embodiment depicted in figure 2, the first latch cylinder 21 and the first motion cylinder 23 are pneumatically operated actuators. Pneumatically operated actuators can use the train's pneumatic system for any controlled motion. Still, in an alternative embodiment, these actuators could be electrically operated actuators. However, their functionality and the required control is similar. In order to control the operation of the pneumatically operated actuators electromechanical valves, i.e. solenoid valves, are installed in the pneumatic circuits.

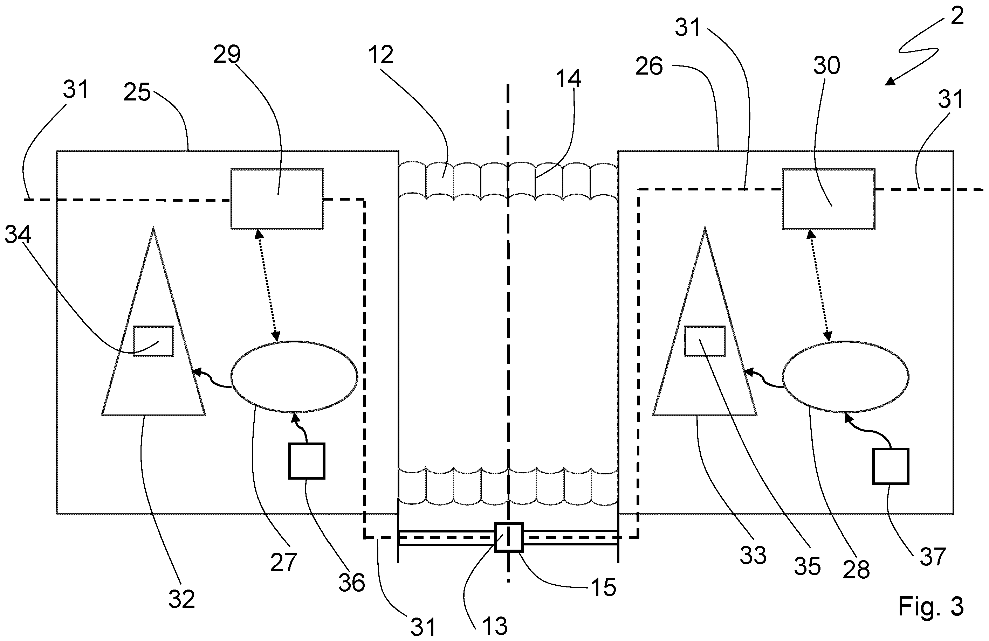

Control of the coupling and uncoupling operations is now explained with reference to figures 3 to 5.

The system 2 for controlling the coupling and uncoupling operations comprises a first coupling controller module 25, which first coupling controller module 25 is mounted at the first coach 4 to control the coupling operation of the first coach 4, and a second coupling controller module 26 is mounted at the second coach 5 to control the coupling and uncoupling operations of the second coach 5 relative to the first coach 4.

The first coupling controller module 25 and the second coupling controller module 26 are identical except for the fact that they control operations of different bellows 12, 14 and automatic couplers 13 at the two different coaches 4, 5. Each of the controller modules 25, 26 comprises a coupling controller, wherein the coupling controller mounted at the first coach 4 is denoted the first coupling controller 27 and the coupling controller mounted at the second coach 5 is denoted the second coupling controller 28. The first and second coupling controllers 27, 28 are responsible for controlling their half of the system 2 during coupling and uncoupling operations.

In order to carry out the coupling and uncoupling operations, the respective coupling controller 27, 28 on the one hand must provide connectivity from and to each other and to a superordinate train controller. On the other hand, each of the first and second coupling controllers must establish connectivity to actuators and sensors mounted at the respective coach 4, 5.

Consequently, each of the first and second controller modules 25, 26 comprises a bus interface, namely the first coupling controller module 25 comprises a first bus interface 29 and the second coupling controller module 26 comprises a second bus interface 30. Each of the bus interfaces 29, 30 is in turn connected to a common communication bus 31. In the exemplary embodiment of figures 3 to 5, the communication bus 31 is a single wired CAN-bus interconnecting all coaches 3, 4, 5, 6 of the train 1. The communication bus 31 allows to communicate data including instructions and state information of the system 2 between the individual coaches 3, 4, 5, 6 and further to the operator's cabs 7 and the overall train controller 38.

In order to implement coupling and uncoupling instructions, the respective coupling controllers 27, 28 are connected to an actuator driver each. The actuator driver of the first coupling controller module 25 is denoted the first actuator driver 32 and the actuator driver of the second coupling controller module 26 is denoted the second actuator driver 33. Each of the actuator drivers comprises an actuator port 34, 35. The respective actuator driver 32, 33, when the system 2 is integrated into the train 1, is connected to a solenoid of a valve controlling one of the actuators of the bellows 12, 14 or the automatic coupler 13, 15.

In order to provide fully automatic coupling or uncoupling operations, a number of actuators is required. Thus, in the schematic representation of Figure 3, a plurality of first and second actuator drivers 32, 33 with their respective first and second actuator ports 34, 35 are provided.

In order to be able to process information about the state of the automatic coupling or uncoupling operations, the respective coupling controller 27, 28 is also connected to a sensor interface. The sensor interfaces of the first coupling controller module 25 are denoted the first sensor interface 36 each, and the sensor interfaces of the second coupling controller module 26 are denoted the second sensor interface 37 each. Each of the sensor interfaces 36, 37 is connected to one of the sensors of the system once the system is integrated in the train. There is a plurality of sensors providing a signal at each coach 4, 5. Thus, each of the coupling controller modules 25, 26 also comprises a plurality of sensor interfaces 36, 37, wherein each of the sensor interfaces 36, 37 receives a sensor signal from a single sensor.

In the illustrated embodiment, during a coupling operation and also during an uncoupling operation, one of the two coupling controllers 27, 28 is the master controller of this operation and the other is the slave controller of this operation. Just for exemplary considerations in the embodiment discussed, the first coupling controller 27 is the master coupling controller and the second coupling controller 28 is the slave coupling controller.

Assuming that for the coupling operation to be discussed the operator works in the operator's cab 7 of the first coach 3, the first coupling controller 27 is the master coupling controller. The first coupling controller 27 in the system 2 is the coupling controller which is connected to the train controller 38 controlling the overall train functions of the train 1. The first coupling controller 27 is the coupling controller powered by and connected to the active train controller 38 first. Powering of the second coupling controller 28 at the second coach 5 occurs only when an electric connection at the first and second automatic couplers 13 and 15 is established and the two halves of the communication bus 31 are electrically connected.

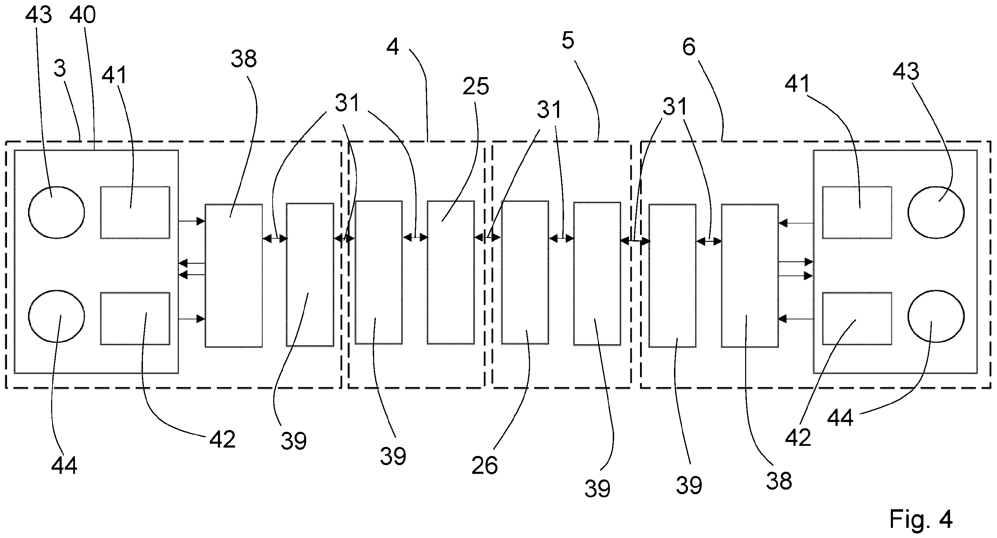

Figure 4 illustrates integration of the first coupling controller module 25 at the first coach 4 and of the second coupling controller module 26 at the second coach 5 into the overall architecture of coupling controllers 25, 26 and two train controllers 38.

From the schematic of figure 4, it is evident that each of the coaches 3, 4, 5, 6 comprises one coupling controller 27, 28, 39 for each coupler/bellows of the respective coach 3, 4, 5, 6. The further coupling controller at the first and second coaches are denoted a third coupling controller 39. All coupling controllers 27, 28, 39 are identical to each other and are connected to the single CAN-bus 31 of the train.

Each of the operated coaches 3, 6 in addition to a coupling controller 39 comprises a superordinate train controller 38. However, during operation of the train only one of the two train controllers 38 is the active and in charge train controller 38. For example, considering the present description, this is the train controller 38 mounted at the first coach 4. In the illustrated embodiment, each of the train controllers 38 is operatively connected to a switchboard 40 in the operator's cab. Each of the switchboards 40 comprises a couple switch 41 and an uncouple switch 42, which switches 41, 42 are considered a control knob in the sense of the present application. Furthermore, each of the switchboards 40 comprises a coupling/uncoupling status indicator 43 as well as an alarm indicator 44. In order to initiate a coupling operation, the operator presses the couple switch 41. The couple switch 41 generates a coupling command transmitted to the train controller 38. The train controller 38 in turn upon receipt of the coupling command generates a coupling instruction and transmits the coupling instruction via a train controller bus interface onto the communication bus 31 and further to the first bus interface 29 of the first coupling controller module 25. The first coupling controller 27 receiving the coupling instruction from the first bus interface 29 then initiates a controlled coupling operation.

In order to initiate an uncoupling operation, the operator presses the uncouple switch 42. The uncouple switch 42 generates an uncoupling command transmitted to the train controller 38. The train controller 38 in turn upon receipt of the uncoupling command generates an uncoupling instruction and transmits the uncoupling instruction via the train controller bus interface onto the communication bus 31 and further to the first bus interface 29 of the first coupling controller module 25. The first coupling controller 27 receiving the uncoupling instruction from the first bus interface 29 then initiates a controlled uncoupling operation.

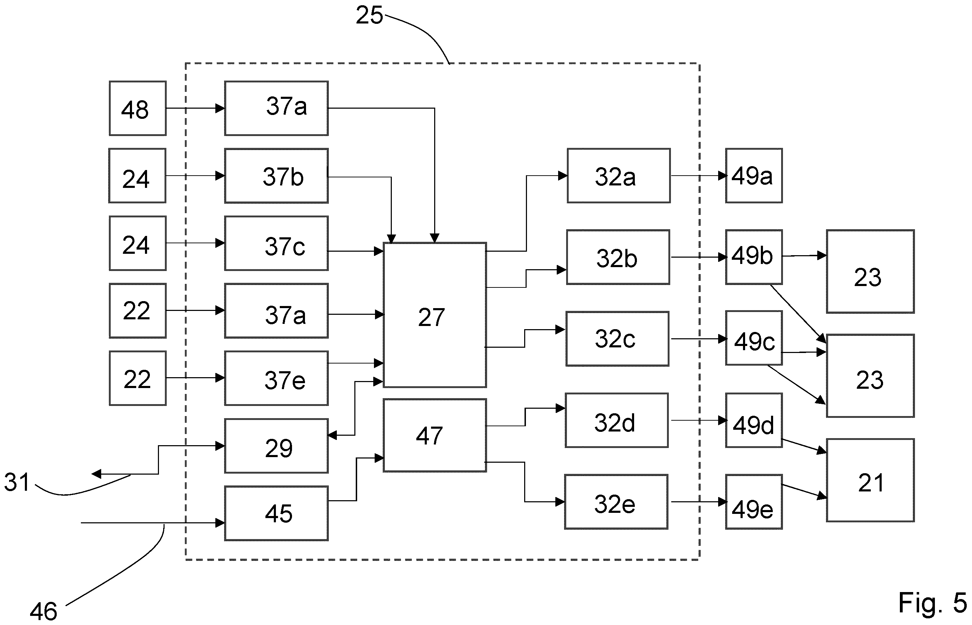

Figure 5 illustrates how a single coupling controller, in the particular example the first coupling controller module 25, may be implemented. On the left-hand side of the coupling controller module 25, the input side is located. The coupling controller module 25 comprises five first sensor interfaces 37a to 37e. The sensor interface 37a is connected to a pressure switch 48 measuring the overall pressure in the pneumatic part of the system 2 and thus giving state information about the automatic system to the first coupling controller 27. The sensor interface 37b is connected to a first motion sensor 24 outputting an extended position signal once the first coupling frame is in the most distanced position with respect to the first mounting frame. The sensor interface 37c is connected to a first motion sensor 24 outputting a retracted position signal once the first coupling frame is in the closest position with respect to the first mounting frame. The sensor interface 37d is connected to a first latching sensor 22 outputting a latched signal once the first lathing mechanism is in a latched state. The sensor interface 37e is connected to a first latching sensor 22 outputting an unlatched signal once the first latching mechanism is in an unlatched state. The pressure switch 48, the motion sensors 24 and the latching sensors 22 are each denoted a first sensor in the sense of the present application.

Furthermore, on the input side also the first bus interface 29 is located providing a bidirectional connectivity to the common train CAN communication bus 31. Finally, on the input side, a power supply connector 45 is provided. The power supply connector 45 is connected to the 24 Volt power supply from the battery 46 and in turn provides the power supply to a DCDC converter 47 for powering the first coupling controller 27. Each of the inputs 37a to 37e, 29 and 45 are provided with an isolation galvanically decoupling the first coupling controller 27 from the input voltages.

The output side of the first coupling controller 27 comprises a set of solenoid drivers, the first actuator drivers 32a to 32e. Each of the solenoid drivers has a first actuator port 34a to 34e. Each of the solenoid drivers 32a to 32e is a first actuator driver in the sense of the present application. The solenoid driver 32a is connected to a main solenoid valve 49a, which pressurizes or unpressurizes the pneumatic system operating the first bellows. The solenoid driver 32b is connected to a forward valve 49b, which pressurizes or unpressurizes an extending motion of two first motion cylinders 23 distancing the first coupling frame from the first mounting frame of the first bellows. The solenoid driver 32c is connected to a reverse valve 49c, which pressurizes or unpressurizes a retracting motion of the two first motion cylinders 23 retracting the first coupling frame closer to the first mounting frame of the first bellows. The solenoid driver 32d is connected to a latching valve 49d, which pressurizes or unpressurizes a latching of a latching cylinder 21 latching the first latching mechanism 19 of the first bellows 12. The solenoid driver 32e is connected to an unlatching valve 49e, which pressurizes or unpressurizes an unlatching of the latching cylinder 21 unlatching the first latching mechanism 19 of the first bellows 12. The two first motion cylinders 23 and the latching cylinder 21 are each denoted a first actuator in the sense of the present application.

For the purposes of the original disclosure, it is pointed out that all features as they become apparent to a person skilled in the art from the present description, the drawings and the claims, even if they have been specifically described only in connection with certain further features, may be combined both individually and in any combination with other features or groups of features disclosed herein, unless this has been expressly excluded or technical circumstances render such combinations impossible or pointless. A comprehensive, explicit description of all conceivable combinations of features is omitted here only for the sake of brevity and readability of the description.

While the invention has been illustrated and described in detail in the drawings and the foregoing description, this illustration and description are merely exemplary and are not intended to limit the scope of protection as defined by the claims. The invention is not limited to the disclosed embodiments.

Variations of the disclosed embodiments will be obvious to those skilled in the art from the drawings, description and appended claims. In the claims, the word "comprising" does not exclude other elements or steps, and the indefinite article "a" does not exclude a plurality. The mere fact that certain features are claimed in different claims does not exclude their combination. Reference signs in the claims are not intended to limit the scope of protection.

### Reference numbers

- 1: Train
- 2: System
- 3, 6: Driving coach
- 4: First coach
- 5: Second coach
- 7: Operator's cab
- 8: Automatic coupler
- 9: Automatic coupler
- 10: First half of the system 2
- 11: Second half of the system 2
- 12: First bellows
- 13: First automatic coupler
- 14: Second bellows
- 15: Second automatic coupler
- 16: First coupling frame
- 17: First mounting frame
- 18: Bridge
- 19: First latching mechanism
- 20: Wall
- 21: First latch cylinder
- 22: First latch switch
- 23: First motion cylinder
- 24: First front face switch
- 25: First coupling controller module
- 26: Second coupling controller module
- 27: First coupling controller
- 28: Second coupling controller
- 29: First bus interface
- 30: Second bus interface
- 31: Communication bus
- 32: First actuator driver
- 32a-e: Solenoid drivers
- 33: Second actuator driver
- 34: First actuator port
- 35: Second actuator port
- 36: First sensor interface
- 37: Second sensor interface
- 38: Train controller
- 39: Third coupling controller
- 40: Switchboard
- 41: Couple switch
- 42: Uncouple switch
- 43: Coupling/Uncoupling status indicator
- 44: Alarm indicator
- 45: Power supply input
- 46: Battery voltage
- 47: DC/DC-converter
- 48: pressure switch
- 49: Valves

## Claims

1. A system (2) for coupling a first coach (4) of a vehicle (1) to a second coach (5) of the vehicle (1), the system (2) comprising
a first coupling controller (27) to be mounted at the first coach (4),
a first bus interface (29) to be mounted at the first coach (4),
wherein the first bus interface (29) is operatively connected to the first coupling controller (27) such that, during operation of the system (2), the first bus interface (29) communicates data to and from the first coupling controller (27),
a first actuator driver (32) to be mounted at the first coach (4),
wherein the first actuator driver (32) is operatively connected to the first coupling controller (27) such that, during operation of the system (2), the first actuator driver (32) receives a first coupling actuator signal from the first coupling controller (27), and
wherein the first actuator driver (32) comprises a first actuator port (34) connectable to a first latching actuator (21) or a first motion actuator (23) of a first bellows (12) of the first coach (4),
a second coupling controller (28) to be mounted at the second coach (5),
a second bus interface (30) to be mounted at the second coach (5),
wherein the second bus interface (30) is operatively connected to the second coupling controller (28) such that, during operation of the system (2), the second bus interface (30) communicates data to and from the second coupling controller (28), and
a second actuator driver (33) to be mounted at the second coach (5),
wherein the second actuator driver (33) is operatively connected to the second coupling controller (28) such that, during operation of the system (2), the second actuator driver (33) receives a second coupling actuator signal from the second coupling controller (28),
wherein the second actuator driver (33) comprises a second actuator port (35) connectable to a second latching actuator or a second motion actuator of a second bellows (14) of the second coach (5),
a communication bus (31),
wherein the communication bus (31), during operation of the system (2), interconnects the first bus interface (29) and the second bus interface (30),
wherein the first coupling controller (27) and the second coupling controller (28) are set up such that, during a coupling operation of the first coach (4) to the second coach (5), the first coupling controller (27) and the second coupling controller (28) carry out the following steps
- establishing a bus communication between the first coupling controller (27) and the second coupling controller (28) via the first bus interface (29) and the second bus interface (30),
- the first coupling controller (27) receiving a coupling instruction via the communication bus (31) and the first bus interface (29),
- the first coupling controller (27) upon receipt of the coupling instruction generating the first coupling actuator signal and outputting the first coupling actuator signal to the first actuator driver (32), and
- the second coupling controller (28) generating the second coupling actuator signal and outputting the second coupling actuator signal to the second actuator driver (33).

2. The system (2) according to the previous claim, wherein the first coupling controller (27) and the second coupling controller (28) are set up such that, during a coupling operation of the first coach (4) to the second coach (5), the first coupling controller (27) and the second coupling controller (28) carry out the following steps
- determining the first coupling controller (27) to become a coupling master controller and the second coupling controller (28) to become a coupling slave controller,
- the first coupling controller (27) upon receipt of the coupling instruction initiating the second coupling controller (28) to generate the second coupling actuator signal and to output the second coupling actuator signal to the second actuator driver (33).

3. The system (2) according to the previous claim, wherein the system (2) is a system (2) for coupling the first coach (4) to the second coach (5) and for uncoupling the first coach (4) from the second coach (5),
wherein the first coupling controller (27) and the second coupling controller (28) are set up such that, during an uncoupling operation of the first coach (4) from the second coach (5), the first coupling controller (27) and the second coupling controller (28) carry out the following steps
- the first coupling controller (27) receiving an uncoupling instruction via the communication bus (31) and the first bus interface (29),
- the first coupling controller (27) upon receipt of the uncoupling instruction generating the first uncoupling actuator signal and outputting the first uncoupling actuator signal to the first actuator driver (32), and
- the second coupling controller (28) generating a second uncoupling actuator signal and outputting the second uncoupling actuator signal to the second actuator driver (33).

4. The system (2) according to any one of the previous claims, wherein the system (2) further comprises
a third coupling controller (39) to be mounted at the first coach (4),
a third bus interface to be mounted at the first coach (4),
wherein the third bus interface is operatively connected to the third coupling controller (39) such that, during operation of the system (2), the third bus interface communicates data to and from the third coupling controller (39), and
wherein the communication bus (31), during operation of the system (2), interconnects the first bus interface (29), the second bus interface (30) and the third bus interface,
a third actuator driver to be mounted at the first coach (4),
wherein the third actuator driver is operatively connected to the third coupling controller (39) such that, during operation of the system (2), the third actuator driver receives a third coupling actuator signal from the third coupling controller (39), and
wherein the third actuator driver comprises a third actuator interface connectable to a third latching actuator or a third motion actuator of a third bellows of the first coach (4).

5. The system (2) according to any one of the previous claims, wherein the system (2) further comprises
a train controller (38) to be mounted at the first coach (4) or at the second coach (5),
a control knob (43, 44),
wherein the control knob (43, 44) is arranged such that when the control knob (43, 44) is actuated the control knob (43, 44) generates a coupling command,
wherein the control knob (43, 44) is operatively connected to the train controller (38) such that, during operation of the system (2), the train controller (38) receives the coupling command from the control knob (43, 44), and
a train controller bus interface,
wherein the train controller bus interface is connected to the communication bus (31), and
wherein the train controller bus interface is operatively connected to the train controller (38) such that, during operation of the system (2), the train controller bus interface receives the coupling instruction from the train controller (38), and
wherein the train controller (38) is set up such that it carries out the following steps, upon receipt of the coupling command
- generating the coupling instruction, and
- transmitting the coupling instruction via the train controller bus interface, the communication bus (31) and the first bus interface (29) to the first coupling controller (27).

6. The system (2) according to any one of the previous claims, wherein the system (2) further comprises
a first sensor interface (37) to be mounted at the first coach (4),
wherein the first sensor interface (37) is operatively connectable to a first sensor (48) for detecting a state of a first bellows (12) of the first coach such that, during operation of the system (2), the first sensor interface (37) receives a first sensor signal from the first sensor (48), and
wherein the first sensor interface (37) is operatively connected to the first coupling controller (27) such that, during operation of the system (2), the first coupling controller (27) receives the first sensor signal from the first sensor interface (37).

7. The system (2) according to any one of the previous claims, wherein the step of establishing the bus communication between the first coupling controller (27) and the second coupling controller (28) via the first bus interface (29), the communication bus (31) and the second bus interface (30), during operation of the system, is established upon providing a mechanical contact between the first coach (4) and the second coach (5).

8. The system (2) according to any one of the previous claims, wherein the system (2) comprises
a first bellows (12),
wherein the first bellows (12) provides protection of a passenger or an object moving from the first coach (4) to the second coach (5),
wherein the first bellows (12) comprises a first coupling frame (16), and
a first latching mechanism (19) at the first coupling frame (16),
wherein the first coupling frame (16) is releasably couplable by the first latching mechanism (19) to a second coupling frame of a second bellows (14) of the second coach (5),
wherein the first bellows (12) comprises the first latching actuator (21), wherein the first latching actuator (21), during operation of the system (2), drives the first latching mechanism (19) between a latched state and an unlatched state,
wherein the first actuator port (34) is operatively coupled to the first latching actuator (21),
wherein the first coupling actuator signal is a latching signal, wherein the latching signal is transmitted from the first actuator driver (32) via the first actuator port (34) to the first latching actuator (22), and
wherein the first latching actuator (22) upon receipt of the first latching signal drives the first latching mechanism (19) from the unlatched state to the latched state,
a second bellows (14),
wherein the second bellows (14) provides protection of a passenger or an object moving from the second coach (5) to the first coach (4),
wherein the second bellows (14) comprises a second coupling frame, and a second latching mechanism at the second coupling frame,
wherein the second coupling frame is releasably couplable by the second latching mechanism to the first coupling frame of the first bellows (12) at the first coach (4),
wherein the second bellows (14) comprises a second latching actuator,
wherein the second latching actuator, during operation of the system (2) drives the second latching mechanism between a latched state and an unlatched state,
wherein the second actuator port (35) is operatively coupled to the second latching actuator (21),
wherein the second coupling actuator signal includes a second latching signal,
wherein the second latching signal is transmitted from the second actuator driver (33) via the second actuator port to the second latching actuator, and
wherein the second latching actuator upon receipt of the second latching signal drives the second latching mechanism from the unlatched state to the latched state.

9. The system according to the previous claim, wherein
the first bellows (12) comprises a first mounting frame (17),
wherein the first mounting frame (17) is fixable to a wall (20) of the first coach (4),
wherein the first bellows (12) comprises a first motion actuator (23),
wherein the first motion actuator (23) is arranged to move the first coupling frame (16) of the first bellows (12) relatively to the first mounting frame (17) between an extended position and a retracted position, wherein in the extended position a distance between the first coupling frame (16) and the first mounting frame (17) is larger than in the retracted position,
wherein the first actuator port (34) is operatively coupled to the first motion actuator (23),
wherein the first coupling actuator signal includes a first extend signal,
wherein the first extend signal is transmitted from the first actuator driver (32) via the first actuator port (34) to the first motion actuator (23) prior to transmitting the first latching signal to the first latching actuator (21), and
wherein the first motion actuator (23) upon receipt of the first extend signal drives the first coupling frame (16) from the retracted position to the extended position, and
wherein the second bellows (14) comprises a second mounting frame,
wherein the second mounting frame is fixable to a wall of the second coach (5),
wherein the second bellows (14) comprises a second motion actuator,
wherein the second motion actuator is arranged to move the second coupling frame of the second bellows (14) relatively to the second mounting frame between an extended position and a retracted position, wherein in the extended position a distance between the second coupling frame and the second mounting frame is larger than in the retracted position,
wherein the second actuator port (35) is operatively coupled to the second motion actuator,
wherein the second coupling actuator signal includes a second extend signal,
wherein the second extend signal is transmitted from the second actuator driver (33) via the second actuator port (35) to the second motion actuator prior to transmitting the second latching signal to the second latching actuator, and
wherein the second motion actuator upon receipt of the second extend signal drives the second coupling frame from the retracted position to the extended position.

10. The system (2) according to anyone of claims 10 or 11 as far as dependent on claim 6,
wherein the first bellows (12) comprises a first latching sensor (22), wherein the first latching sensor (22) is operatively coupled to the first sensor interface (37), wherein the first latching sensor (22) is arranged to sense whether the first latching mechanism (19) is in the latched state and to generate a first latched signal once the first latching mechanism (19) is in the latched state, and
wherein the second bellows (14) comprises a second latching sensor, which second latching sensor is operatively coupled to the second sensor interface, wherein the second latching sensor is arranged to sense whether the second latching mechanism is in the latched state and to generate a second latched signal once the second latching mechanism is in the latched state.

11. The system (2) according to anyone of claims 10 to 12, wherein the system (2) comprises
a first automatic coupler (13),
wherein the first automatic coupler (13) is mountable at an end of the first coach (4),
wherein the first automatic coupler (13) provides for a mechanical coupling to a second automatic coupler (15) mountable at the second coach (5),
wherein the first automatic coupler (13) comprises a first coupling actuator and a first locking mechanism,
wherein the first coupling actuator is operationally connected to the first actuator driver (32),
wherein the first coupling actuator, during operation of the system (2), drives the first locking mechanism between a locked state and an unlocked state,
wherein the first coupling actuator signal includes a first coupling signal, and
wherein the first coupling actuator upon receipt of the first coupling signal drives the first locking mechanism from the unlocked state to the locked state, and
the second automatic coupler (15),
wherein the second automatic coupler (15) is mountable at an end of the second coach (5),
wherein the second automatic coupler (15) provides for a mechanical coupling to the first automatic coupler (13),
wherein the second automatic coupler (15) comprises a second coupling actuator and a second locking mechanism,
wherein the second coupling actuator is operationally connected to the second actuator driver (33),
wherein the second coupling actuator, during operation of the system (2), drives the second locking mechanism between a locked state and an unlocked state,
wherein the second coupling actuator signal includes a second coupling signal, and
wherein the second coupling actuator upon receipt of the second coupling signal drives the second locking mechanism from the unlocked state to the locked state.

12. The system (2) according to anyone of the previous claims as far as dependent on claim 5, wherein the train controller comprises a master clock, the first coupling controller (27) and the second coupling controller (28) each comprise a slave clock, wherein when connecting the first coupling controller (27) or the second coupling controller (28) to the communication bus, the slave clock of the respective coupling controller is synchronised with the master clock.

13. A first coach (4) and a second coach (5) of a vehicle comprising a system according to any one of the previous claims.
